# EUROPEAN PATENT SPECIFICATION

(11) **EP 0 835 607 B1**
(45) Date of publication and mention of the grant of the patent: **09.01.2002**
(21) Application number: 97307856.1
(22) Date of filing: 06.10.1997
(51) Int. Cl.: A21B 3/04

(54) **Improvements in bakery ovens**
Backofen
Four de boulangerie

(30) Priority: 08.10.1996 GB 9620969
(43) Date of publication of application: 15.04.1998
(73) Proprietor: Cranage, Peter Edward, Leicester LE5 2HQ (GB)
(72) Inventor: Cranage, Peter Edward, Leicester LE5 2HQ (GB)
(74) Representative: Spoor, Brian

(56) References cited:
- GB-A- 1 580 442
- GB-A- 2 063 045
- US-A- 3 394 665

## Description

This invention relates to bakery ovens.

In a known bakery installation, moulded dough pieces, after having been finally proved, are baked in tins in an oven for about 20 or 25 minutes. During the first 5 minutes that each dough piece is in the oven, it is subjected to a steamy atmosphere, caused by injection into the oven of steam which has been generated in a boiler. The purpose of the steam injection is three-fold: firstly, it causes the top of the loaf to glaze; secondly, it prevents or reduces breaking or splitting of the top of the loaf; and thirdly, it reduces the springiness of the loaf and thus makes the loaf easier to cut and spreading of the slices easier. The use of steam injection does, however, have a disadvantage in that the energy required to heat the boiler to produce the steam adds to the running cost of the installation.

It is also known, eg from British Patent No 2146222, to feed water and compressed air through nozzles mounted on the wall of a bakery oven. Each nozzle contains an ultrasonic resonator chamber which causes the compressed air to create a standing shock wave which in turn atomises the water and creates a mist. Such a system, whilst effective, suffers from the disadvantage that the ultrasonic nozzles are relatively complex and expensive, and also that a compressed air supply must be provided.

There has now been devised a bakery oven which overcomes or substantially mitigates the above mentioned disadvantages.

A bakery oven fitted with at least one water-atomising nozzle which is supplied solely with water under high pressure is known from US-A-3 394 665.

In accordance with the present invention there is provided a bakery oven fitted with at least one water-atomising nozzle, said nozzle being supplied, in use, solely with water at a pressure in excess of 4,14 bar (60psi).

The bakery oven according to the invention is advantageous in that it provides the benefits of oven steaming without the costs associated with the generation of steam prior to injection into the oven, and without the necessity to use ultrasonic nozzles and to provide a supply of compressed air.

The bakery oven according to the invention may have any of the conventional oven configurations, eg so-called deck, rack and travelling ovens. In all cases, there are preferably provided a plurality of atomizing nozzles which may be arranged in one or more rows.

In most oven configurations, the nozzle(s) will be located in the heated oven chamber (eg at a side wall or roof thereof) and will direct a water mist onto the products being baked or into the space above the products. In the case of a so-called travelling oven (in which the products are baked whilst being conveyed through the oven), however, nozzle(s) may alternatively be fitted in the entry zone of the oven, ie outside the main oven chamber.

The water is preferably supplied to the atomizing nozzle(s) at a pressure in excess of 5,16 bar (80psi), eg a pressure of between 5,16 bar (80psi) and 8,27 bar (120psi), eg about 6,89 bar (100psi). In some applications it may be possible to use very much higher water pressures, eg several hundred psi or even 68,9 bar (1000psi) or more.

The invention will now be described in greater detail, by way of illustration only, with reference to the accompanying drawings, in which
Figure 1 is a schematic sectional side view of an entrance portion of a so-called "travelling" bakery oven incorporating a water misting system; and
Figure 2 is a schematic representation of a water misting system for use with a "deck" oven.

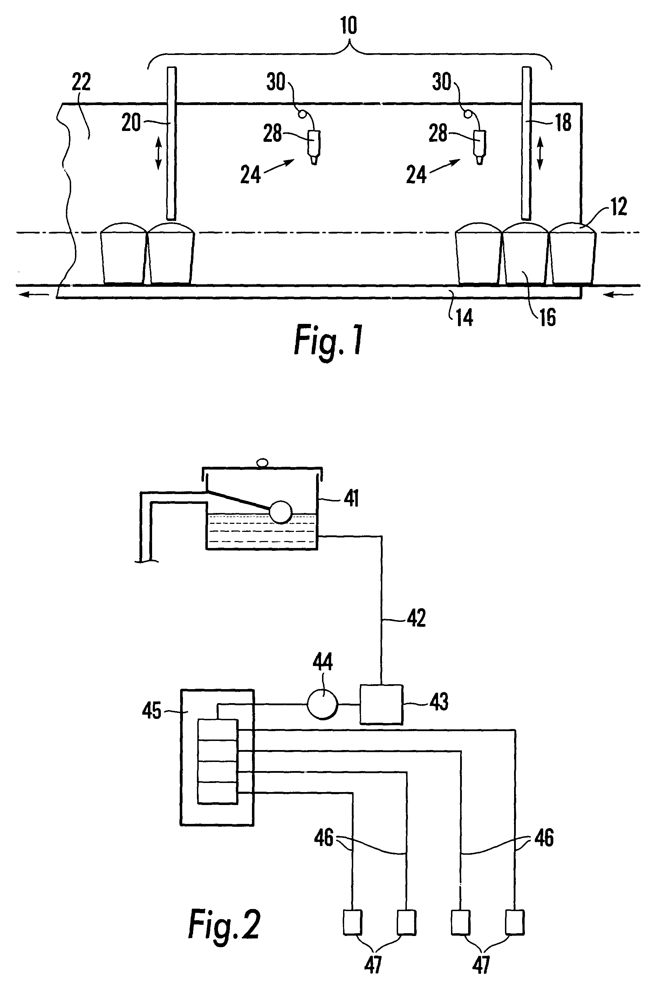

Referring first to Figure 1, a travelling bakery oven has a heated entrance zone 10 into which proved dough pieces 12 are fed on a conveyor 14, each dough piece 12 being in a baking tin 16. A vertically slidable door 18 is provided at the entrance to the oven and a further such door 20 is provided downstream of the door 18. The doors are adjusted so that their lower edges are just clear of the dough pieces, and the lower edges may be provided with downwardly extending flexible lightweight flaps (not shown). The speed of the conveyor 14 is set so that each dough piece takes about 5 minutes to pass from door 18 to door 20, and the dough pieces then continue on the conveyor for baking in the main portion 22 of the oven for about 15 or 20 minutes.

Rows 24 of downwardly-directed atomiser nozzles 28 are mounted in the roof of the entrance zone 10 of the oven, each row 24 extending transversely across the oven. Each nozzle 28 is fed with water, which may or may not be pre-heated, under high pressure (approximately 6,89 bar (100psi)) via a pipe 30 to produce a fog of atomised water to be discharged from the nozzle 28. Although the discharged droplets will take a small amount of heat from the oven in warming to the oven temperature, there will be substantial saving in energy compared with known ovens into which live steam is injected.

Figure 2 shows in more detail the high pressure water system, in this case in a form suitable for application to a deck oven having four baking decks. A holding tank 41 is supplied with water from a mains supply and is fed via a pipe 42, a pump 43 and a pressure regulating valve 44 to a bank 45 of solenoid valves. The solenoid valves control supply of the pressurised water along any one of four feed pipes 46 to respective atomizing nozzles 47 disposed in each of the four decks of the oven. The pump 43 may be of the Calpeda type with a working pressure of 5,17 bar (75 psi) to 8,27 bar (120psi).

The operation of the bank 45 of solenoid valves is under the control of a control panel (not shown). In a typical installation, the four nozzles 47 are operated sequentially, each being activated for a period of approximately 30 seconds twice per hour.

The atomizing nozzles 28,47 may be of any suitable design. The nozzles are conveniently of brass or stainless steel and may be of a form conventionally used for the generation of water mists for other applications (eg for dust suppression or evaporative cooling). Suitable nozzles are supplied by Spraying Systems Limited (4 Bourne Mill Industrial Estate, Guildford Road, Farnham, Surrey GU9 9PS). By suitable choice of nozzle geometry the distribution of the mist emitted by the nozzle may be tailored to the particular application and oven configuration.

The invention may be applied to other types of bakery oven, for example rotary rack ovens in which the dough pieces are revolved on racks inside the oven enclosure, deck ovens and any other type of bakery ovens, in which case the high pressure water supply system may be substantially similar to that shown in Figure 2.

Also, the oven may be used for baking other bakery products which in the past have been subjected to a steamy atmosphere in the oven, for example crusty cobs, baps, tinned bread, bloomers, pizzas, and all biscuit products, which may be baked on the sole of the oven, on baking sheets as well as in baking tins.

## Claims

1. A bakery oven fitted with at least one water-atomising nozzle, said nozzle being supplied, in use, solely with water at a pressure in excess of 4,14 bar (60 psi).

2. An oven as claimed in claim 1, comprising a plurality of atomizing nozzles.

3. An oven as claimed in claim 2, wherein said nozzles are arranged in one or more rows.

4. An oven as claimed in any preceding claim, wherein said water is supplied to said nozzle(s) by a pump.

5. An oven as claimed in any preceding claim, wherein supply of said water to said nozzle(s) is controlled by a solenoid valve.

6. An oven as claimed in any preceding claim, comprising a plurality of nozzles which are operated sequentially.

7. An oven as claimed in any preceding claim, wherein said water is supplied at a pressure of between 5,16 bar (80 psi) and 8,27 bar (120 psi).

8. An oven as claimed in any preceding claim, which is a deck oven.

9. An oven as claimed in any preceding claim, wherein said nozzle(s) are located within a heated oven chamber.

10. An oven as claimed in any one of claims 1 to 7, which is a travelling oven.

11. An oven as claimed in claim 10, wherein said nozzle(s) are located in an entry zone of said oven, externally of a heated oven chamber.

12. A water misting system for a bakery oven, said system comprising at least one water-atomising nozzle fitted, in use, to said oven, and means for supplying water to said nozzle at a pressure in excess of 4,14 bar (60 psi).

## Patentansprüche

1. Bäckereiofen, der mit mindestens einer Wasserzerstäubungsdüse ausgerüstet ist, wobei genannte Düse bei Gebrauch nur mit Wasser bei einem Druck von über 4,14 bar (60 psi) versorgt wird.

2. Ofen nach Anspruch 1, der eine Vielzahl von Zerstäubungsdüsen umfasst.

3. Ofen nach Anspruch 2, wobei genannte Düsen in einer Reihe oder mehreren Reihen angeordnet sind.

4. Ofen nach einem der vorangehenden Ansprüche, wobei genanntes Wasser von einer Pumpe an genannte Düse(n) geleitet wird.

5. Ofen nach einem der vorangehenden Ansprüche, wobei die Zuleitung von genanntem Wasser an genannte Düse(n) von einem Magnetventil gesteuert wird.

6. Ofen nach einem der vorangehenden Ansprüche, der eine Vielzahl von Düsen umfasst, die sequentiell betrieben werden.

7. Ofen nach einem der vorangehenden Ansprüche, wobei genanntes Wasser bei einem Druck zwischen 5,16 bar (80 psi) und 8,27 bar (20 psi) zugeleitet wird.

8. Ofen nach einem der vorangehenden Ansprüche, bei dem es sich um einen Etagenofen handelt.

9. Ofen nach einem der vorangehenden Ansprüche, wobei sich genannte Düse(n) in einer erhitzten Ofenkammer befindet/befinden.

10. Ofen nach einem der vorangehenden Ansprüche 1 bis 7, bei dem es sich um einen Bandbackofen handelt.

11. Ofen nach Anspruch 10, wobei sich genannte Düse(n) in einer Eingangszone von genanntem Ofen, außerhalb einer erhitzten Ofenkammer befindet/befinden.

12. Wasservernebelungssystem für einen Bäckereiofen, wobei genanntes System mindestens eine Wasserzerstäubungsdüse, die bei Gebrauch an genanntem Ofen angebracht wird, und Mittel zur Zuleitung von Wasser an genannte Düse bei einem Druck von über 4,14 bar (60 psi) umfasst.

## Revendications

1. Four de boulanger avec au moins une busette d'atomisation d'eau, ladite busette étant alimentée, en service, uniquement en eau à une pression supérieure à 4,14 bars (60 psi).

2. Four selon la revendication 1, comprenant une pluralité de busettes d'atomisation.

3. Four selon la revendication 2, dans lequel lesdites busettes sont disposées en une ou plusieurs rangées.

4. Four selon l'une quelconque des revendications précédentes, dans lequel ladite eau est alimentée à ladite (auxdites) busette(s) par une pompe.

5. Four selon l'une quelconque des revendications précédentes, dans lequel l'alimentation de ladite eau à ladite (auxdites) busette(s) est commandée par une électrovanne.

6. Four selon l'une quelconque des revendications précédentes, comprenant une pluralité de busettes qui sont actionnées séquentiellement.

7. Four selon l'une quelconque des revendications précédentes, dans lequel ladite eau est alimentée à une pression située entre 5,16 bars (80 psi) et 8,27 bars (120 psi).

8. Four selon l'une quelconque des revendications précédentes, qui est un four à pont.

9. Four selon l'une quelconque des revendications précédentes, dans lequel ladite ou lesdites busettes sont situées à l'intérieur d'une chambre de cuisson chauffée.

10. Four selon l'une quelconque des revendications 1 à 7, qui est un four tunnel.

11. Four selon la revendication 10, dans lequel ladite ou lesdites busettes sont situées dans une zone d'entrée dudit four, à l'extérieur d'une chambre de cuisson chauffée.

12. Système de nébulisation d'eau pour un four de boulanger, ledit système comprenant au moins une busette d'atomisation montée, en service, sur ledit four, et un moyen pour alimenter de l'eau à ladite busette à une pression supérieure à 4,46 bars (60 psi).
